# EUROPEAN PATENT SPECIFICATION

(11) **EP 3 429 161 B1**
(45) Date of publication and mention of the grant of the patent: **21.09.2022**
(21) Application number: 18181275.1
(22) Date of filing: 02.07.2018
(51) Int. Cl.: H04L 9/40

(54) **A NETWORK SWITCH FOR AUDITING COMMUNICATIONS ON A DETERMINISTIC NETWORK**
NETZWERKSCHALTER ZUR PRÜFUNG VON KOMMUNIKATIONEN IN EINEM DETERMINISTISCHEN NETZWERK
COMMUTATEUR DE RÉSEAU POUR LA VÉRIFICATION DE COMMUNICATIONS SUR UN RÉSEAU DÉTERMINISTE

(30) Priority: 10.07.2017 GB 201711054
(43) Date of publication of application: 16.01.2019
(73) Proprietor: GE Aviation Systems Limited, Cheltenham Gloucestershire GL52 8SF (GB)
(72) Inventor: SCHWINDT, Stefan Alexander, Cheltenham, Gloucestershire GL52 8SF (GB)
(74) Representative: Openshaw & Co.

(56) References cited:
- US-A- 5 161 192
- US-A1- 2006 037 077
- US-A1- 2017 118 020
- IAN LAND AND JEFF ELLIOTT: "Architecting ARINC 664, Part 7 (AFDX) Solutions", APPLICATION NOTE: VIRTEX-4 AND VIRTEX-5 F, , no. version 1.0.1 22 May 2009 (2009-05-22), pages 1-25, XP007918728, Retrieved from the Internet: URL:http://www.xilinx.com/support/document ation/application_notes/xapp1130.pdf [retrieved on 2018-10-15]

## Description

### FIELD

The present subject matter relates generally to network switches, and, more particularly network switches for deterministic networks.

### BACKGROUND

Deterministic networks attempt to control when a data packet arrives at its destination (e.g., within a bounded timeframe). This category of networking may be used for a myriad of applications such as industrial automation, vehicle control systems, and other systems that require the precise delivery of control commands to a controlled device. In particular, a protocol can define communications between electronic devices connected to a communication network used in aviation, automotive and industrial control applications. For example, the protocol may permit a first electronic device on the communication network to communicate with a second electronic device on the communication network. However, the protocol may preclude the first electronic device from communicating with a third electronic device on the communication network. In addition, the protocol may define the content of messages exchanged between the first electronic device and the second electronic device. In this way, the protocol can ensure communications on the network are deterministic.

US 5161192 A relates to a local area network repeater that compares data read from a frame with stored access rules to determine whether a frame is permitted. US 2006/037077 A1 relates to a network intrusion detection system. Ian Land and Jeff Elliott: "Architecting ARINC 664, Part 7 (AFDX) Solutions", APPLICATION NOTE: VIRTEX-4 AND VIRTEX-5 F, no. version 1.0.1 22 May 2009 (2009-05-22), pages 1-25, XP007918728 is an overview of the architecture and function of an avionics full duplex switched ethernet system. US 2017/118020 A1 relates to the communication of secret data between two connected sub-nets of a network.

### BRIEF DESCRIPTION

Aspects and advantages of the present disclosure will be set forth in part in the following description, or may be obvious from the description, or may be learned through practice of the present disclosure.

In one example aspect, a network switch for auditing communications on a deterministic network can include one or more computing device(s). The computing device(s) can be configured to receive a data packet comprising at least a source address and a destination address. More specifically, the computing device(s) can receive the data packet via the deterministic network. The computing device(s) can be further configured to determine whether the source address corresponds to a first electronic device on the deterministic network. In addition, the computing device(s) can be configured to determine whether the destination address corresponds to a second electronic device on the deterministic network. When the source address corresponds to the first electronic device and the destination address corresponds to the second electronic device, the computing device(s) can be configured to compare an actual value for a characteristic of the data packet against a reference value for the characteristic. When the actual value for the characteristic corresponds to the reference value for the characteristic, the computing device(s) can be configured to transmit the data packet to the destination address. The data packet comprises a header and a payload. The header includes the source address and the destination address and the payload includes data comprising one or more entries. The reference value of the characteristic comprises an approved range of values for the data. The computing device or devices are further configured to reject the data packet when the actual value falls outside the approved range of values.

In another example aspect, a method for auditing communications on a deterministic network can include receiving, at a network switch of the deterministic network, a data packet comprising at least a source address and a destination address. The data packet comprises a header and a payload, and the header includes the source address and the destination address. The method further includes determining, by the network switch, whether the source address corresponds to a first electronic device on the deterministic network. In addition, the method can include determining, by the network switch, whether the destination address corresponds to a second electronic device on the deterministic network. More specifically, the second electronic device is different than the first electronic device. When the source address corresponds to the first electronic device and the destination address corresponds to the second electronic device, the method can further include comparing, by the network switch, an actual value for a characteristic of the data packet against a reference value for the characteristic. When the actual value for the characteristic corresponds to the reference value for the characteristic, the method can include transmitting, by the network switch, the data packet to the second electronic device. The payload includes data comprising one or more entries, and the reference value of the characteristic comprises a range of allowable values for the data. The method comprises rejecting the data packet when the actual value falls outside the range of allowable values.

In yet another example aspect, an aerial vehicle can include a deterministic network and one or more electronic devices communicatively coupled to the deterministic network. The aerial vehicle can also include a network switch communicatively coupled to the deterministic network, the network switch being in accordance with the first aspect.

These and other features, aspects and advantages of the present disclosure will become better understood with reference to the following description and appended claims. The accompanying drawings, which are incorporated in and constitute a part of this specification, illustrate aspects of the present disclosure and, together with the description, serve to explain the principles of the present disclosure.

### BRIEF DESCRIPTION OF THE DRAWINGS

A full and enabling disclosure of the present disclosure, including the best mode thereof, directed to one of ordinary skill in the art, is set forth in the specification, which makes reference to the appended Figs., in which:
FIG. 1 illustrates an aerial vehicle according to example embodiments of the present disclosure;
FIG. 2 illustrates a computing system for an aerial vehicle according to example embodiments of the present disclosure;
FIG. 3 illustrates a network switch according to example embodiments of the present disclosure;
FIG. 4 illustrates a data packet according to example embodiments of the present disclosure;
FIG. 5 illustrates a flow diagram of an example method for auditing communications on a deterministic network according to example embodiments of the present disclosure;
FIG. 6 illustrates a flow diagram of an example method for auditing communications on a deterministic network according to example embodiments of the present disclosure; and
FIG. 7 illustrates example vehicles according to example embodiments of the present disclosure.

### DETAILED DESCRIPTION

Reference will now be made in detail to present embodiments of the present disclosure, one or more examples of which are illustrated in the accompanying drawings. The detailed description uses numerical and letter designations to refer to features in the drawings.

As used herein, the terms "first" and "second" can be used interchangeably to distinguish one component from another and are not intended to signify location or importance of the individual components. The singular forms "a", "an", and "the" include plural references unless the context clearly dictates otherwise.

Example embodiments of the present disclosure are directed to a network switch and related methods for using the network switch to audit communications (e.g., data packets) on a deterministic network. The network switch can receive messages or data packets comprising at least a source address and a destination address. The source address can be a unique identifier (e.g., network ID) of an electronic device sending the data packet. The destination address can be a unique identifier of an electronic device that is in the intended recipient of the data packet. The network switch can access data indicative of the unique identifier for each electronic device on the network. In this manner, the network switch can determine whether the source address of the data packet belongs to one of the electronic devices on the network. Likewise, the network switch can determine whether the destination address of the data packet belongs to one of the electronic devices on the network.

In addition, the network switch can access a protocol defining communications on the network. In example embodiments, the protocol can define a set of approved messages for the network. In addition, the protocol can assign a reference value to one or more characteristics(s) of the approved messages. In one example embodiment, the characteristics(s) can include how frequently each approved message can be transmitted. In another example embodiment, the characteristics(s) can include a range of allowable values for data included in the payload of each approved message. In yet another example embodiment, the characteristic(s) can also include a listing of electronic devices that can receive each approved message. As will be discussed below in more detail, the protocol can be used to audit incoming messages (e.g., data packets).

After the network switch determines the source address and the destination address of a data packet correspond to two different electronic devices on the deterministic network, the network switch can use the protocol to further audit the data packet. As an example, if the data packet originates from a first electronic device and is intended for a second electronic device, the network switch can crosscheck the characteristic(s) to determine whether the second electronic device is permitted to receive the data packet. If the network switch determines the second electronic device is not permitted to receive the data packet, then the network switch will not transmit the data packet to the second electronic device. Instead, the network switch will reject (e.g., drop) the data packet.

If, however, the network switch determines the second electronic device can receive the data packet, then the network switch can further audit the data packet. In example embodiments, the network switch can inspect data stored in the payload of the data packet. More specifically, the network switch can compare an actual value for characteristic(s) of the data against the reference value defined in the protocol. As an example, if an actual length (e.g., number of bits) of the data is equal to 8 bits and the reference value for the length is 4 bits, then the network switch can reject (e.g., drop) the data packet. As another example, if the actual data type of the data is a char (e.g., a letter) and the reference value for the data type is a float (e.g., number), then the network switch can reject (e.g., drop) the data packet or, alternatively, quarantine the data packet. In this way, the data packet can be subject to forensic analysis.

In example embodiments, a portion of the data included in the payload of data packet can be restricted. More specifically, the portion of the data can be classified differently than the remaining portion of the data. In example embodiments, the portion can be classified as secret data. In contrast, the remaining portion of the data can be classified as non-secret data. As will be discussed below in more detail, the network switch can be configured to determine whether the portion of the data classified as secret data must be redacted or obfuscated (that is, made unclear) prior to transmission of the data packet to the second electronic device.

In example embodiments, the first electronic device and the second electronic device can be on different subnetworks of the deterministic network. More specifically, the first electronic device can be on a first subnetwork rated for data classified as both secret and non-secret. In contrast, the second electronic device can be on a second subnetwork rate for only non-secret data. As such, when the network switch receives a data packet from the first electronic device that is intended for the second electronic device, the network switch can be configured to redact any portion of the data classified as secret data before transmitting the data packet to the second electronic device. Alternatively, the network switch can obfuscate the portion of the data classified as secret before transmitting the data packet to the second electronic device. For example, if the portion of the data classified as secret includes position data, the network switch can alter the position data. More specifically, the network switch can reduce the accuracy of the position data before transmitting the data packet to the second electronic device. In this manner, the network switch can maintain confidentiality of data exchanged within the second subnetwork

The systems and methods described herein can provide a number of technical effects and benefits. For instance, the network switch can improve security of the network without requiring additional sensors or devices. This can translate into cost and weight savings, which can be critical in aviation applications.

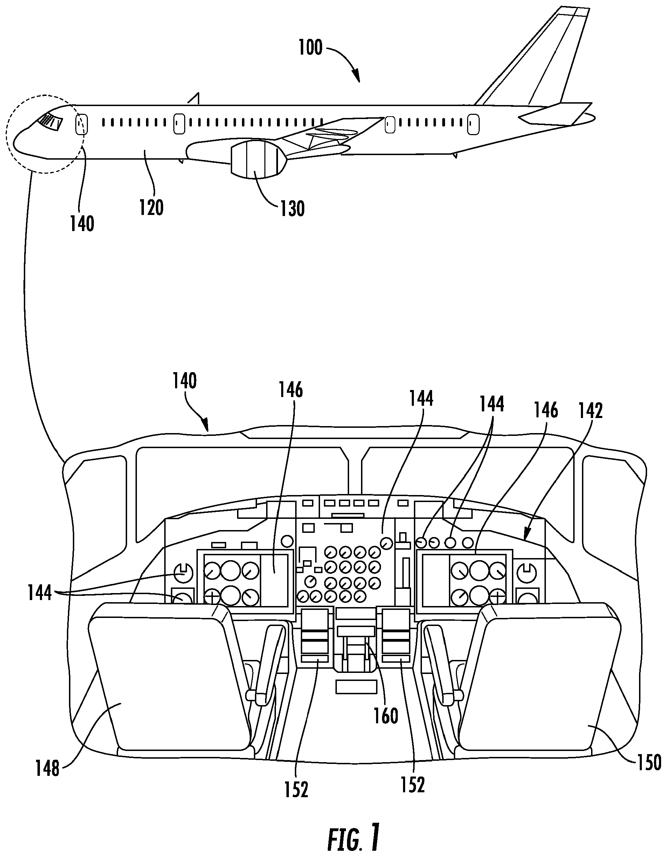

FIG. 1 depicts an aerial vehicle 100 according to example embodiments of the present disclosure. As shown, the aerial vehicle 100 can include a fuselage 120, one or more engine(s) 130, and a cockpit 140. In example embodiments, the cockpit 140 can include a flight deck 142 having various instruments 144 and flight displays 146. It should be appreciated that instruments 144 can include, without limitation, a dial, gauge, or any other suitable analog device.

A first user (e.g., a pilot) can be present in a seat 148 and a second user (e.g., a co-pilot) can be present in a seat 150. The flight deck 142 can be located in front of the pilot and co-pilot and may provide the flight crew (e.g., pilot and co-pilot) with information to aid in operating the aerial vehicle 100. The flight displays 146 can include primary flight displays (PFDs), multi-function displays (MFDs), or both. During operation of the aerial vehicle 100, both the instruments 144 and flight displays 146 can display a wide range of vehicle, flight, navigation, and other information used in the operation and control of the aerial vehicle 100.

The instruments 144 and flight displays 146 may be laid out in any manner including having fewer or more instruments or displays. Further, the flight displays 146 need not be coplanar and need not be the same size. A touch screen display or touch screen surface (not shown) may be included in the flight displays 146 and may be used by one or more flight crew members, including the pilot and co-pilot, to interact with the aerial vehicle 100. The touch screen surface may take any suitable form including that of a liquid crystal display (LCD) and may use various physical or electrical attributes to sense inputs from the flight crew. It is contemplated that the flight displays 146 can be dynamic and that one or more cursor control devices (not shown) and/or one or more multifunction keyboards 152 can be included in the cockpit 140 and may be used by one or more flight crew members to interact with systems of the aerial vehicle 100. In this manner, the flight deck 142 may be considered a user interface between the flight crew and the aerial vehicle 100.

Additionally, the cockpit 140 can include an operator manipulated input device 160 that allow members of the flight crew to control operation of the aerial vehicle 100. In one example embodiment, the operator manipulated input device 160 can be used to control the engine power of the one or more engines 130. More specifically, the operator manipulated input device 160 can include a lever having a handle, and the lever can be movable between a first position and a second position. In this manner, a flight crew member can move the lever between the first and second positions to control the engine power of the one or more engine(s) 130.

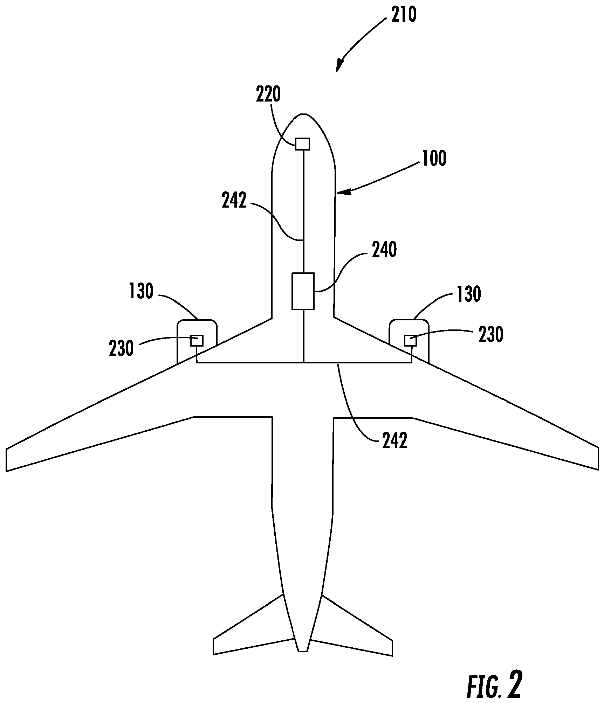

FIG. 2 illustrates an example embodiment of an onboard computing system 210 for the aerial vehicle 100. As shown, the onboard computing system 210 can include one or more onboard computing device(s) 220 that can be in communication with one or more control system(s) 230 configured to control operation of the aerial vehicle 100. Examples of the control system(s) 230 can include, without limitation, digital control systems, throttle systems, inertial reference systems, flight instrument systems, engine control systems, auxiliary power systems, fuel monitoring systems, engine vibration monitoring systems, communication systems, flap control systems, flight data acquisition systems, a flight management system (FMS) and other systems.

As shown, the aerial vehicle 100 can include a communication network 240 having one or more communication lines 242. In example embodiments, the computing device(s) 220 and control system(s) 230 can be communicatively coupled to the network 240 via the communication line(s) 242. It should be appreciated that the communication network 240 can be a deterministic network based on any suitable communication standard. In one example embodiment, the communication network 240 can be based on the ARINC 664 standard. In another example embodiment, the communication network 240 can be based on the MIL-STD 1553 standard. In yet another example embodiment, the communication network 240 can be based on the IEEE 802.3 standard.

It should be appreciated that the communication network 240 discussed above with reference to FIG. 2 is not limited aviation application. For example, the communication network 240 can be utilized in industrial control applications. More specifically, the communication network 240 can be based on Industrial Equipment Control 61158 protocol. Alternatively, the communication network 240 can be used in automotive applications. More specifically, the communication network 240 can be based on the FlexRay protocol.

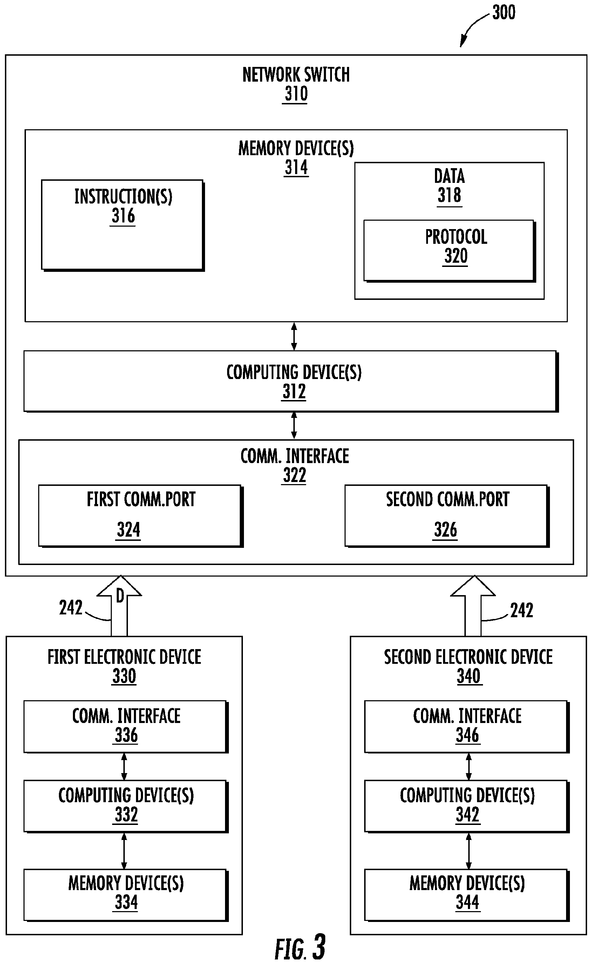

FIG. 3 depicts an example embodiment of a system 300 for auditing data communications on a deterministic network, such as the communication network 240 of FIG. 2. As shown, the system 300 can include a network switch 310 having one or more computing device(s) 312 configured to perform a variety of computer-implemented functions (e.g., performing the methods, steps, calculations and the like disclosed herein). As used herein, the term "computing device(s)" refers not only to integrated circuits referred to in the art as being included in a computer, but also refers to a application specific integrated circuit (ASIC), a field programmable gate array (FPGA), and any other programmable circuit.

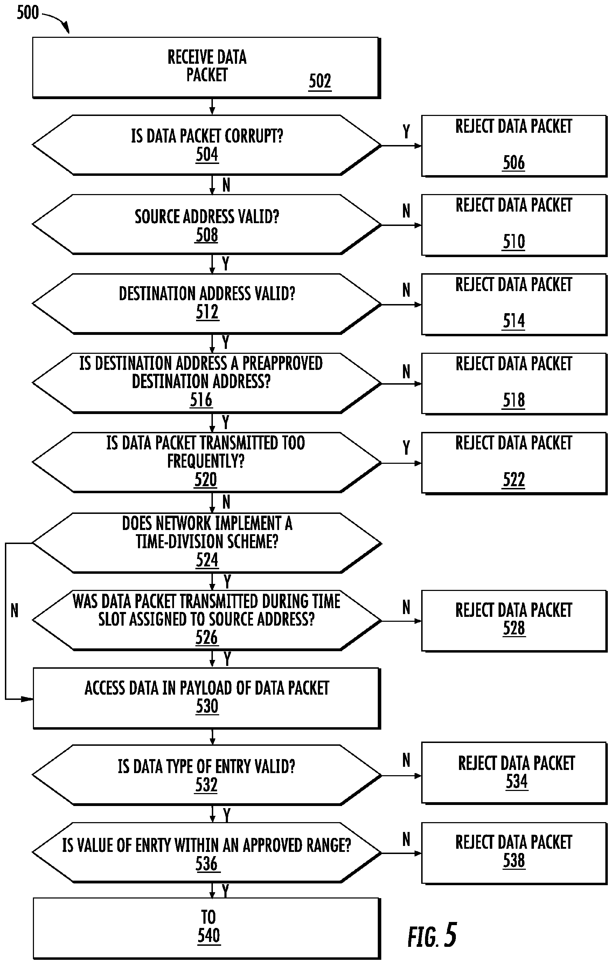

In addition, the network switch 310 can include one or more memory device(s) 314. Examples of the memory device(s) 314 can include one more computer-readable media, including, but not limited to, non-transitory computer-readable media, RAM, ROM, hard drives, flash drive, or other memory devices. The memory device(s) 314 can store information accessible by the computing device(s) 312, including computer-readable instructions 316 that can be executed by the computing device(s) 312. The computer-readable instructions 316 can be any set of instructions that when executed by the computing device(s) 312, cause the computing device(s) 312 to perform operations. The computer-readable instructions 316 can be software written in any suitable programming language or can be implemented in hardware. In some example embodiments, the computer-readable instructions 316 can be executed by the one or more computing device(s) 312 to perform operations, such as auditing data communications on the network 240, as described below with reference to FIG. 5.

The memory device(s) 314 can further store data 318 that can be accessed by the one or more computing device(s) 312. As shown, the data 318 can include a protocol 320 that defines the manner in which devices on the network 240 can interact with one another. More specifically, the protocol 320 can define a reference value for one or more characteristic(s) of approved messages that can be transmitted on the network 240. In an example embodiment, the characteristic(s) can include a format for the message, how often (e.g., frequency) the message can be transmitted, a range of allowable values for data contained in the message, and a list of one or more devices on the network 240 that are permitted to receive the message. It should be appreciated that the protocol 320 can be configurable. More specifically, characteristic(s) can be added or removed from the protocol 320. In addition, the reference value assigned to one of the characteristic(s) can be modified. For example, a reference value assigned to the range of allowable values for data contained in the message can be modified. As will be discussed below in more detail, the reference value for the characteristic(s) included in the protocol 320 can be used to audit data packets (e.g., messages) on the communication network 240.

The network switch 310 can also include a communication interface 322 that can be used to communicate with other devices on the communication network 240. The communication interface 322 can include any suitable components for interfacing with one or more network(s), including for example, transmitters, receivers, ports, controllers, antennas, or other suitable components. In example embodiments, the communication interface 322 can include a first communication port 324 and a second communication port 326.

In example embodiments, the communication network 240 can include a first electronic device 330 and a second electronic device 340. As shown, the first electronic device 330 and the second electronic device 340 can each include one or more computing device(s) 332, 342 configured to perform a variety of computer-implemented functions. In addition, the first and second electronic devices 330, 340 can each include one or more memory device(s) 334, 344 configured to store data and computer-readable instructions. Still further, the first electronic device 330 and the second electronic 340 can each include a communication interface 336, 346 that can be used to communicate with the network switch 310.

As shown, the first electronic device 330 and the second electronic device 340 can each be communicatively coupled to the network switch 310 via the communication line(s) 242. More specifically, the first electronic device 330 can be communicatively coupled to the first communication port 324 of the network switch 310. In contrast, the second electronic device 340 can be communicatively coupled to the second communication port 326 of the network switch 310.

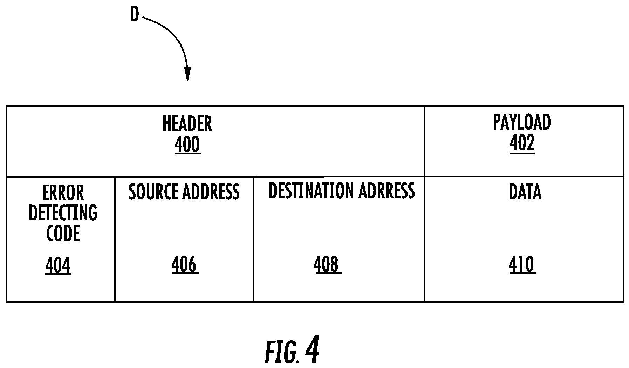

Referring now to FIGS. 3 and 4 in combination, the network switch 310 can receive a message or data packet D from the first electronic device 330. The data packet D can include a header 400 and a payload 402. As shown, the header 400 can include an error-detecting code 404 for detecting one or more errors occurring during transmission of the data packet D. As an example, electromagnetic interference (EMI) on the communication line(s) 242 can corrupt the data packet D. In an example embodiment, the error-detecting code 404 can be a cyclic redundancy check (CRC). In another example embodiment, the error-detecting code 404 can be a checksum value. In yet another example embodiment, the error-detecting code 404 can be a hash value.

The header 400 can also include a source address 406 and a destination address 408. The source address 406 can be a unique identifier assigned to the first electronic device 420, and the destination address 408 can be a unique identifier assigned to the second electronic device 340. In example embodiments, the memory device(s) 314 can include a table that lists the unique identifier (e.g., Network ID) assigned to each electronic device on the communication network 240. In this way, the network switch 300 can determine the data packet D originates from the first electronic device 330 and is intended for the second electronic device 340. As will be discussed below in more detail, the protocol 320 can include one or more rules that, when implemented by the processor(s) 312 of the network switch 310, can cause the network switch 310 to further validate incoming data packets, such as the data packet D depicted in FIG. 3.

In example embodiments, the data packet 310 can include a media access control (MAC) address of the first electronic device 330. The MAC address can be another unique identifier assigned to each electronic device on the communication network 240. In this way, the network switch 310 can be configured to validate the data packet D based on both the network ID and the MAC address of the first electronic device 330. As an example, if a rogue device transmits the data packet D and has a network ID that matches the network ID assigned to the first electronic device 310, the network switch 310 can compare the MAC address of the rogue device against the MAC address assigned to the first electronic device 330. If the MAC address of the rogue device does not match the MAC address assigned to the first electronic device 330, then the network switch 310 can drop the data packet D. In this way, the MAC address can provide an additional measure the network switch 310 can use to safeguard the network 240 against rogue devices having a network ID that matches the network ID assigned to one of the electronic devices on the network 240.

In addition, the protocol 320 can include a list or table of the network ID and MAC address of each electronic device that is communicatively coupled to one of the plurality of communication ports of the network switch 310. For example, since the first electronic device 310 is communicatively coupled to the first communication port 324, the network ID and MAC address of the first electronic device 330 can be assigned to the first communication port 324. Furthermore, since the second electronic device 340 is communicatively coupled to the second communication port 326, the network ID and MAC address of the second electronic device 340 can be assigned to the communication port 326. As an example, if a rogue device transmits the data packet and has both a network ID and MAC address assigned to the first electronic device 330, the network switch 310 can use the list to validate the data packet D. If the rogue device transmitted the data packet D to the second communication port 326 of the network switch 310, then the network switch 310 can drop the data packet D. In this way, the list can provides an additional measure the network switch 310 can use to safeguard the network 340 against rogue devices having a network ID and MAC address that matches both the network ID and MAC address assigned to one of the electronic devices on the network 240. The payload 402 of the data packet D can include data 416. In example embodiments, the data 416 can be one or more values for the second electronic device 340. More specifically, the one or more value(s) can be represented as hexadecimal numbers. It should be appreciated, however, that the value(s) can be represented in any suitable number format. As will be discussed below in more detail, the network switch 310 can be configured to audit the data packet D. In this manner, the network switch 310 can improve security of the communication network 240.

FIG. 5 depicts a flow diagram of an example method 500 for auditing data communications on a deterministic network. The method 500 can be implemented using, for instance, the system 300 of FIG. 3. FIG. 5 depicts steps performed in a particular order for purposes of illustration and discussion. Those of ordinary skill in the art, using the disclosures provided herein, will understand that various steps of any of the methods disclosed herein can be adapted, modified, rearranged, performed simultaneously or modified in various ways without deviating from the scope of the present disclosure.

At (502), the method 500 can include receiving, at a network switch of the deterministic network, a data packet comprising at least a source address and a destination address. At (504), the method 500 can include determining, by the network device, whether the data packet is corrupted. Specifically, in example embodiments, the data packet can include a an error-detecting code that can be used to determine whether the data packet is corrupted. It should be appreciated that the computing device(s) of the network switch 310 can be configured to implement any suitable error-detecting algorithm. For example, the computing device(s) can implement a checksum algorithm. In this manner, the computing device(s) can determine whether data packet is corrupted. If, upon implementing the error-detecting algorithm, the computing device(s) determine the data packet is corrupted, the method 500 can proceed to (506) and reject (e.g., drop) the data packet. If, however, the computing device(s) determine the data packet is not corrupted, the method 500 can proceed to (508).

At (508), the method 500 can include determining, by the one or more computing device(s), whether the source address corresponds to a first electronic device. In example embodiments, determining whether the source address corresponds to the first electronic device can include accessing, by the one or more computing device(s), a header of the data packet. In addition, the method 500 can include comparing the source address against a unique identifier (e.g., network ID) assigned to each electronic device on the network, including the first electronic device. If the source address does not match one of the unique identifiers (e.g., the first electronic device), then the method 500 can include, at (510), rejecting, by the one or more computing device(s), the data packet. Alternatively, if the source address matches one of the unique identifiers, such as the unique identifier assigned to the first electronic device, then the method 500 can proceed to (516).

At (512), the method 500 can include determining, by the one or more computing device(s) of the network switch 310, whether the destination address corresponds to a second electronic device that is different than the first electronic device. In example embodiments, determining whether the destination address corresponds to the second electronic device can include accessing, by the one or more computing device(s), a header of the data packet. In addition, the method 500 can include comparing the source address against a unique identifier (e.g., network ID) assigned to each electronic device on the network, including the first electronic device. If the source address does not match one of the unique identifiers, then the method 500 can include, at (514), rejecting, by the one or more computing device(s), the data packet. More specifically, the one or more computing device(s) can drop the data packet. Alternatively, if the destination address matches one of the unique identifiers, such as the unique identifier assigned to the second electronic device, then the method 500 can proceed to (516).

At (516), the method 500 can include comparing, by the computing device(s), an actual value for a characteristic of the data packet against a reference value for the characteristic. In an example embodiment, the characteristic can be a preapproved destination address. Put another way, the preapproved address can be the unique identifier assigned to another electronic device on the network that is permitted to receive the data packet from the electronic device associated with the first electronic device. More specifically, the actual value can be the unique identifier (e.g., network ID) assigned to the second electronic device, and the reference value can include one or more destination addresses of electronic devices on the network 240 that are approved to receive the data packet. If the actual value (e.g., unique identifier assigned to the second electronic device) does not match the reference value (e.g., approved destination addresses), then the method 500 can include, at (518), rejecting the data packet. If, however, the actual value matches the reference value, then the method 500 can proceed to (520).

At (520), the method 500 can include comparing, by the computing device(s), an actual value for a characteristic of the data packet against a reference value for the characteristic. In an example embodiment, the characteristic can be how frequently the first electronic device transmits the data. More specifically, the actual value can be a time lapse between successive transmissions of the data packet, and the reference value can be a threshold value indicating how frequently the first electronic device is allowed to transmit the data packet. In example embodiments, the computing device(s) can include a timer configured to monitor an amount of time lapsing between successive transmissions of the data packet. If the actual value (e.g., a value measured by the timer) is equal to or below the reference value, then the network switch can determine the first electronic device is transmitting the data packet too frequently and reject (e.g., drop) the data packet at (522). If, however, the actual value is greater than the reference value, then the method 500 can proceed to (524).

At (524), the method 500 can include determining, by the computing device(s), whether the protocol for the deterministic network includes a time-division scheme. Specifically, in example embodiments, the time-division scheme can include a plurality of time slots, and each electronic device on the deterministic network can be assigned one time slot of the plurality of time slots. For example, the first electronic device can be assigned a first time slot, whereas the second electronic device can be assigned a second time slot. If the protocol for the deterministic network does include the time-division scheme, then the method 500 can proceed to (526). Otherwise, the method 500 can proceed to (530).

At (526), the method 500 can include determining, by the computing device(s), whether the data packet was transmitted during a time slot assigned to the electronic device whose unique identifier matches the source address. If the data packet was transmitted outside the time slot, the method 500 proceeds to (528) and the computing device(s) reject the data packet. Otherwise, the method 500 proceeds to (530).

At (530), the method 500 can include accessing, by the computing device(s), a payload of the data packet. In example embodiments, the payload can include data that is to be transmitted to the second electronic device. After accessing the payload, the method 500 can proceed to (532).

At (532), the method 500 can include comparing, by the one or more computing device(s), an actual value for a characteristic of the data packet against a reference value for the characteristic. In an example embodiment, the characteristic can be a data type (e.g., char, int, float, etc.) of a data entry. More specifically, the actual value can be the data type of the data entry, and the reference value can be an allowed data type assigned to the data entry. As such, if the actual value for the data entry does not match the reference value for the data entry, then the method 500 can proceed to (534) and reject (e.g., drop) the data packet. Otherwise, the method 500 can proceed to (536).

At (536), the method 500 can again include comparing, by the one or more computing device(s), an actual value for a characteristic of the data packet against a reference value for the characteristic. In an example embodiment, the characteristic can be a range of approved values for the data entry. More specifically, the actual value can be a number or letter indicating the present value of the data entry, and the reference value can include the range of approved values. As such, the actual value for the data entry does not match the reference value for the data entry, then the method 500 can proceed to (538) and reject (e.g., drop) the data packet. Otherwise, the method 500 can proceed to (540).

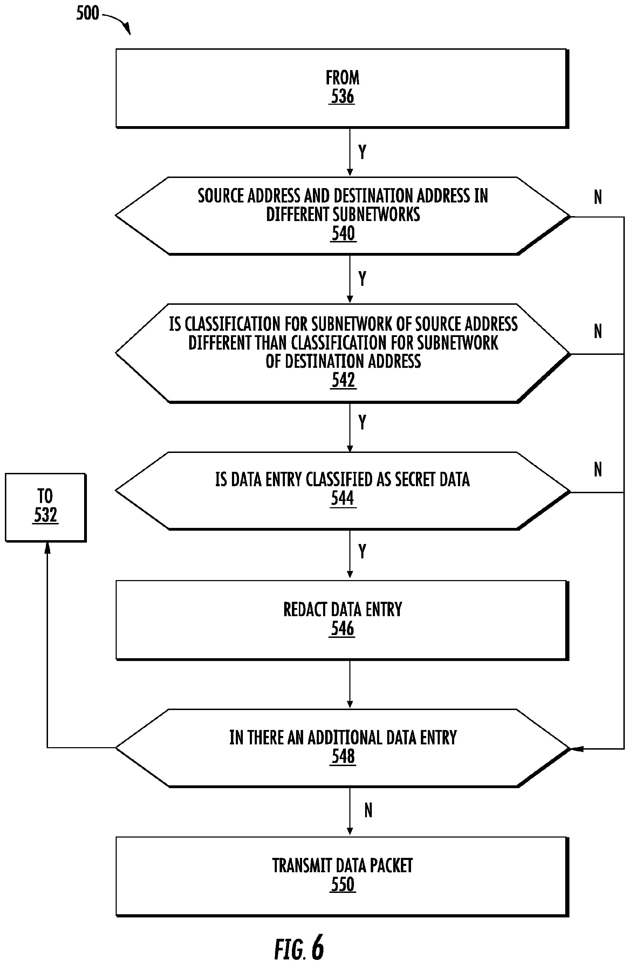

Referring now to FIG. 6, the method 500 can include, at (540), determining, by the computing device(s), whether the electronic device corresponding to the source and the electronic device corresponding to the destination address are in different subnetworks. If the electronic device corresponding to the source address is in a first subnetwork and the electronic device corresponding to the destination address is in a second subnetwork that is different than the first subnetwork, the method 500 can proceed to (548). Otherwise, the method 500 can proceed to (542).

At (542), the method 500 can include determining, by the one or more computing device(s), whether a classification assigned to a first subnetwork that includes the electronic device corresponding to the source address is higher than a classification assigned to a second subnetwork that includes the electronic device corresponding to the destination address. For example, if the first subnetwork is rated for secret data and non-secret data and the second subnetwork is only rated for non-secret data, then the classification of the first subnetwork can be greater than the classification of the second subnetwork. When the classification of the first subnetwork is different (e.g., greater) than the classification of the second subnetwork, the method 500 can proceed to (544). Otherwise, the method 500 can proceed to (548).

At (544), the method 500 can include determining, by the one or more computing device(s), whether the data entry included in the payload of the data packet comprises secret data. If the data entry does include secret data, the method 500 can proceed to (546). Otherwise, the method 500 can proceed to (548).

At (546), the method 500 can include redacting, by the one more computing device(s), the data entry classified as secret data. In alternative embodiments, however, the method can include obfuscating, by the one or more computing device(s), the data entry classified as secret data. More specifically, the computing device(s) can introduce error to diminish the accuracy of the data entry classified as secret data. In this way, the network switch can maintain confidentiality of the first subnetwork relative to the second subnetwork. After redacting or obfuscating the portion of the data classified as secret data, the method 500 can proceed to (548).

At (548), the method 500 can include checking, by the one or more computing device(s), whether the data includes additional entries. If the data does include additional data entries, then the method 500 reverts to (532). Otherwise, the method 500 can proceed to (544) and transmit the data packet to the second electronic device. In example embodiments, the protocol for the deterministic network can include a list of approved messages (e.g., data packets) that have been identified as bad messages (e.g., messages posing a security risk). As an example, an approved message (e.g., data packet) can include data comprising a text string that satisfies the criteria (e.g, data type, range of allowable values) discussed above. However, the text string can contain a combination of numbers, letters, or both that can comprise operation of a device receiving the data packet. As such, a data packet having a text string that includes the combination can be classified as a bad message. In this way, the protocol can provide an additional safeguard beyond those discussed above with reference to FIGS. 5 and 6.

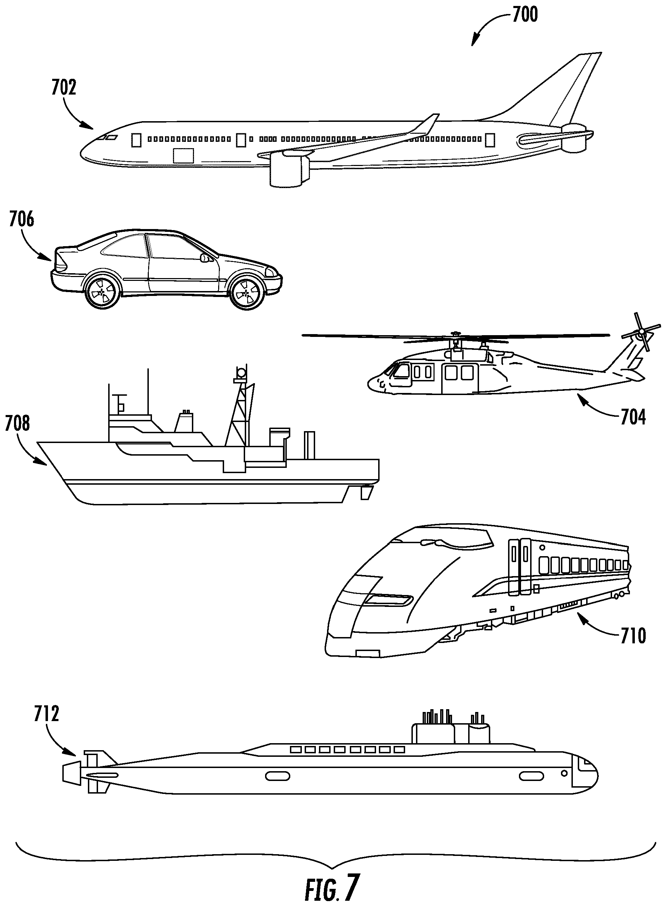

Referring now to FIG.7, example vehicles 700 according to example embodiments of the present disclosure are depicted. The systems and methods of the present disclosure can be implemented on an aerial vehicle 702, helicopter 704, automobile 706, boat 708, train 710, submarine 712 and/or any other suitable vehicles. One of ordinary skill in the art would understand that the systems and methods of the present disclosure can be implemented on other vehicles without deviating from the scope of the present disclosure.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

This written description uses examples to disclose example embodiments of the present disclosure, including making and using any devices or systems and performing any incorporated methods. The patentable scope of the present disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A network switch (310) for auditing communications on a deterministic network (240), the network switch comprising one or more computing devices (312) configured to:
receive a data packet comprising at least a source address (406) and a destination address (408); the computing device or devices are configured to determine whether the source address corresponds to a first electronic device (330) on the deterministic network;
determine whether the destination address corresponds to a second electronic device (340) on the deterministic network, the second electronic device being different than the first electronic device;
compare an actual value for a characteristic of the data packet against a reference value for the characteristic when the source address corresponds to the first electronic device and the destination address corresponds to the second electronic device; and
transmit the data packet to the destination address when the actual value for the characteristic corresponds to the reference value for the characteristic;
wherein the data packet comprises a header and a payload, wherein the header includes the source address and the destination address, wherein the payload includes data comprising one or more entries, and wherein the reference value of the characteristic comprises an approved range of values for the data;
wherein the computing device or devices are further configured to reject the data packet when the actual value falls outside the approved range of values.

2. The network switch (310) of claim 1, wherein the characteristic comprises how frequently the first electronic device transmits the data packet; and wherein the reference value includes a threshold value defining how frequently the first electronic device is permitted to transmit the data packet.

3. The network switch (310) of any preceding claim, wherein the actual value is an amount of time lapsing since the network switch last received the data packet from the first electronic device, and wherein the computing device or devices are further configured to reject the data packet when the actual value is equal to or less than the threshold value.

4. The network switch (310) of any preceding claim, wherein when a protocol for the deterministic network defines a time-division scheme comprising a first time slot for the first electronic device and a second time slot for the second electronic device, the computing device or devices are be configured to determine whether the data packet was transmitted during the first time slot.

5. The network switch (310) of any preceding claim, wherein the computing device or devices is further configured to:
determine whether the first electronic device is included within a first subnetwork of the deterministic network and the second electronic device is included within a second subnetwork of the deterministic network, wherein the first subnetwork is rated for data classified as secret and non-secret data and the second subnetwork is rated for non-secret data, and
determine whether a portion of the data included in the payload of the data packet is classified as secret data.

6. The network switch (310) of claim 5, wherein, in response to positive determinations, the computing device or devices are configured to redact or obfuscate the portion of the data classified as secret data prior to transmitting the data packet to the second electronic device.

7. A method for auditing communications on a deterministic network (240), the method comprising:
receiving, at a network switch (310) of the deterministic network, a data packet comprising at least a source address (406) and a destination address (408), wherein the data packet comprises a header and a payload, wherein the header includes the source address and the destination address; the method further comprises:
determining, by the network switch (310), whether the source address corresponds to a first electronic device (330) on the deterministic network;
determining, by the network switch, whether the destination address corresponds to a second electronic device (340) on the deterministic network, the second electronic device being different than the first electronic device;
comparing, by the network switch, an actual value for a characteristic of the data packet against a reference value for the characteristic when the source address corresponds to the first electronic device and the destination address corresponds to the second electronic device; and
transmitting, by the network switch, the data packet to the second electronic device when the actual value corresponds to the reference value;
wherein the payload includes data comprising one or more entries, and the reference value of the characteristic comprises a range of allowable values for the data, the method comprising rejecting the data packet when the actual value falls outside the range of allowable values.

8. The method of claim 7, wherein the characteristic comprises how frequently the first electronic device transmits the data packet; wherein the reference value includes a threshold value defining how frequently the first electronic device is allowed to transmit the data packet, wherein the actual value is equal to an amount of time lapsing since the network switch last received the data packet from the first electronic device, and wherein the method further comprises rejecting, by computing device or devices of the network switch, the data packet when the actual value is greater than the threshold value.

9. An aerial vehicle comprising:
a deterministic communication network (240);
one or more electronic devices (330, 340) communicatively coupled to the communication network; and
a network switch communicatively coupled to the communication network, the network switch being in accordance with any of claims 1 to 6.

## Patentansprüche

1. Netzwerk-Switch (310) zum Prüfen von Kommunikationen in einem deterministischen Netzwerk (240), der Netzwerk-Switch umfassend eine oder mehrere Rechenvorrichtungen (312), konfiguriert zum:
Empfangen eines Datenpakets, umfassend mindestens eine Quelladresse (406) und eine Zieladresse (408);
wobei die Rechenvorrichtung oder -vorrichtungen konfiguriert sind, um zu bestimmen, ob die Quelladresse einer ersten elektronischen Vorrichtung (330) in dem deterministischen Netzwerk entspricht;
Bestimmen, ob die Zieladresse einer zweiten elektronischen Vorrichtung (340) in dem deterministischen Netzwerk entspricht, wobei sich die zweite elektronische Vorrichtung von der ersten elektronischen Vorrichtung unterscheidet;
Vergleichen eines Istwerts für ein Merkmal des Datenpakets gegen einen Referenzwert für das Merkmal, wenn die Quelladresse der ersten elektronischen Vorrichtung entspricht und die Zieladresse der zweiten elektronischen Vorrichtung entspricht; und
Übertragen des Datenpakets an die Zieladresse, wenn der Istwert für das Merkmal dem Referenzwert für das Merkmal entspricht;
wobei das Datenpaket einen Header und eine Nutzinformation umfasst, wobei der Header die Quelladresse und die Zieladresse einschließt, wobei die Nutzinformation Daten einschließt, umfassend einen oder mehrere Einträge, und wobei der Referenzwert des Merkmals einen zulässigen Wertebereich für die Daten umfasst;
wobei die Rechenvorrichtung oder -vorrichtungen ferner konfiguriert sind, um das Datenpaket abzulehnen, wenn der Istwert außerhalb des zulässigen Wertebereichs liegt.

2. Netzwerk-Switch (310) nach Anspruch 1, wobei das Merkmal umfasst, wie häufig die erste elektronische Vorrichtung das Datenpaket überträgt; und wobei der Referenzwert einen Schwellenwert einschließt, der definiert, wie häufig die erste elektronische Vorrichtung das Datenpaket übertragen darf.

3. Netzwerk-Switch (310) nach einem der vorstehenden Ansprüche, wobei der Istwert eine Zeitdauer ist, die abläuft seitdem der Netzwerk-Switch zuletzt das Datenpaket von der ersten elektronischen Vorrichtung empfangen hat und wobei die Rechenvorrichtung oder -vorrichtungen ferner konfiguriert sind, um das Datenpaket abzulehnen, wenn der Istwert gleich oder kleiner als der Schwellenwert ist.

4. Netzwerk-Switch (310) nach einem der vorstehenden Ansprüche, wobei, wenn ein Protokoll für das deterministische Netzwerk ein Zeitteilungsschema definiert, umfassend einen ersten Zeitschlitz für die erste elektronische Vorrichtung und einen zweiten Zeitschlitz für die zweite elektronische Vorrichtung, die Rechenvorrichtung oder -vorrichtungen konfiguriert sind, um zu bestimmen, ob das Datenpaket während des ersten Zeitschlitzes übertragen wurde.

5. Netzwerk-Switch (310) nach einem der vorstehenden Ansprüche, wobei die Rechenvorrichtung oder -vorrichtungen ferner konfiguriert sind zum:
Bestimmen, ob die erste elektronische Vorrichtung innerhalb eines ersten Teilnetzwerks des deterministischen Netzwerks eingeschlossen ist und die zweite elektronische Vorrichtung innerhalb eines zweiten Teilnetzwerks des deterministischen Netzwerks eingeschlossen ist, wobei das erste Teilnetzwerk für Daten bewertet wird, die als Geheim- und Nicht-Geheimdaten klassifiziert sind, und das zweite Teilnetzwerk für Nicht-Geheimdaten bewertet wird, und
Bestimmen, ob ein Abschnitt der Daten, die in der Nutzinformation des Datenpakets eingeschlossen sind, als Geheimdaten klassifiziert wird.

6. Netzwerk-Switch (310) nach Anspruch 5, wobei als Reaktion auf positive Bestimmungen die Rechenvorrichtung oder -vorrichtungen konfiguriert sind, um den Abschnitt der Daten, die als Geheimdaten klassifiziert sind, vor dem Übertragen des Datenpakets an die zweite elektronische Vorrichtung zu redigieren oder zu obfuskieren.

7. Verfahren zum Prüfen von Kommunikationen in einem deterministischen Netzwerk (240), das Verfahren umfassend:
Empfangen, an einem Netzwerk-Switch (310) des deterministischen Netzwerks, eines Datenpakets, umfassend mindestens eine Quelladresse (406) und eine Zieladresse (408), wobei das Datenpaket einen Header und eine Nutzinformation umfasst, wobei der Header die Quelladresse und die Zieladresse einschließt;
wobei das Verfahren ferner Folgendes umfasst:
Bestimmen, durch den Netzwerk-Switch (310), ob die Quelladresse einer ersten elektronischen Vorrichtung (330) in dem deterministischen Netzwerk entspricht;
Bestimmen, durch den Netzwerk-Switch, ob die Zieladresse einer zweiten elektronischen Vorrichtung (340) in dem deterministischen Netzwerk entspricht, wobei sich die zweite elektronische Vorrichtung von der ersten elektronischen Vorrichtung unterscheidet;
Vergleichen, durch den Netzwerk-Switch, eines Istwerts für ein Merkmal des Datenpakets gegen einen Referenzwert für das Merkmal, wenn die Quelladresse der ersten elektronischen Vorrichtung entspricht und die Zieladresse der zweiten elektronischen Vorrichtung entspricht; und
Übertragen, durch den Netzwerk-Switch, des Datenpakets an die zweite elektronische Vorrichtung, wenn der Istwert dem Referenzwert entspricht;
wobei die Nutzinformation Daten einschließt, umfassend einen oder mehrere Einträge, und der Referenzwert des Merkmals einen Bereich von erlaubten Werten für die Daten umfasst, das Verfahren umfassend das Ablehnen des Datenpakets, wenn der Istwert außerhalb des Bereichs von erlaubten Werten liegt.

8. Verfahren nach Anspruch 7, wobei das Merkmal umfasst, wie häufig die erste elektronische Vorrichtung das Datenpaket überträgt; wobei der Referenzwert einen Schwellenwert einschließt, der definiert, wie häufig die erste elektronische Vorrichtung das Datenpaket übertragen darf, wobei der Istwert gleich einer Zeitdauer ist, die abläuft, seitdem der Netzwerk-Switch zuletzt das Datenpaket von der ersten elektronischen Vorrichtung empfangen hat und wobei das Verfahren ferner das Ablehnen, durch die Rechenvorrichtung oder -vorrichtungen des Netzwerk-Switch, des Datenpakets umfasst, wenn der Istwert größer als der Schwellenwert ist.

9. Luftfahrzeug, umfassend:
ein deterministisches Kommunikationsnetzwerk (240);
eine oder mehrere elektronische Vorrichtungen (330, 340), die mit dem Kommunikationsnetzwerk kommunikativ gekoppelt sind; und
einen Netzwerk-Switch, der mit dem Kommunikationsnetzwerk kommunikativ gekoppelt ist, wobei der Netzwerk-Switch gemäß einem der Ansprüche 1 bis 6 ist.

## Revendications

1. Commutateur réseau (310) permettant de vérifier des communications sur un réseau déterministe (240), le commutateur réseau comprenant un ou plusieurs dispositifs informatiques (312) configurés pour :
recevoir un paquet de données comprenant au moins une adresse source (406) et une adresse de destination (408) ;
le dispositif informatique ou les dispositifs informatiques sont configurés pour déterminer si l'adresse source correspond à un premier dispositif électronique (330) sur le réseau déterministe ;
déterminer si l'adresse de destination correspond à un second dispositif électronique (340) sur le réseau déterministe, le second dispositif électronique étant différent du premier dispositif électronique ;
comparer une valeur réelle pour une caractéristique du paquet de données à une valeur de référence pour la caractéristique lorsque l'adresse source correspond au premier dispositif électronique et que l'adresse de destination correspond au second dispositif électronique ; et
transmettre le paquet de données à l'adresse de destination lorsque la valeur réelle pour la caractéristique correspond à la valeur de référence pour la caractéristique ;
dans lequel le paquet de données comprend un en-tête et une charge utile, dans lequel l'en-tête comporte l'adresse source et l'adresse de destination, dans lequel la charge utile comporte des données comprenant une ou plusieurs entrées, et dans lequel la valeur de référence de la caractéristique comprend une plage de valeurs approuvée pour les données ;
dans lequel le dispositif informatique ou les dispositifs informatiques sont en outre configurés pour rejeter le paquet de données lorsque la valeur réelle tombe en dehors de la plage de valeurs approuvée.

2. Commutateur réseau (310) selon la revendication 1, dans lequel la caractéristique comprend la fréquence à laquelle le premier dispositif électronique transmet le paquet de données ; et dans lequel la valeur de référence comporte une valeur seuil définissant la fréquence à laquelle le premier dispositif électronique est autorisé à transmettre le paquet de données.

3. Commutateur réseau (310) selon une quelconque revendication précédente, dans lequel la valeur réelle est une quantité de temps écoulé depuis que le commutateur réseau a reçu pour la dernière fois le paquet de données du premier dispositif électronique, et dans lequel le dispositif informatique ou les dispositifs informatiques sont en outre configurés pour rejeter le paquet de données lorsque la valeur réelle est égale ou inférieure à la valeur seuil.

4. Commutateur réseau (310) selon une quelconque revendication précédente, dans lequel, lorsqu'un protocole pour le réseau déterministe définit un schéma de répartition temporelle comprenant un premier créneau temporel pour le premier dispositif électronique et un second créneau temporel pour le second dispositif électronique, le dispositif informatique ou les dispositifs informatiques sont configurés pour déterminer si le paquet de données a été transmis pendant le premier créneau temporel.

5. Commutateur réseau (310) selon une quelconque revendication précédente, dans lequel le dispositif informatique ou les dispositifs informatiques sont en outre configurés pour :
déterminer si le premier dispositif électronique est inclus au sein d'un premier sous-réseau du réseau déterministe et si le second dispositif électronique est inclus au sein d'un second sous-réseau du réseau déterministe, dans lequel le premier sous-réseau est qualifié pour des données classées secrètes et non secrètes et le second sous-réseau est qualifié pour des données non secrètes, et
déterminer si une partie des données incluses dans la charge utile du paquet de données est classée comme étant des données secrètes.

6. Commutateur réseau (310) selon la revendication 5, dans lequel, en réponse à des déterminations positives, le dispositif informatique ou les dispositifs informatiques sont configurés pour caviarder ou masquer la partie des données classées comme étant des données secrètes avant de transmettre le paquet de données au second dispositif électronique.

7. Procédé permettant de vérifier des communications sur un réseau déterministe (240), le procédé comprenant :
la réception, au niveau d'un commutateur réseau (310) du réseau déterministe, d'un paquet de données comprenant au moins une adresse source (406) et une adresse de destination (408), dans lequel le paquet de données comprend un en-tête et une charge utile, dans lequel l'en-tête comporte l'adresse source et l'adresse de destination ;
le procédé comprenant en outre :
le fait de déterminer, par le commutateur réseau (310), si l'adresse source correspond à un premier dispositif électronique (330) sur le réseau déterministe ;
le fait de déterminer, par le commutateur réseau, si l'adresse de destination correspond à un second dispositif électronique (340) sur le réseau déterministe, le second dispositif électronique étant différent du premier dispositif électronique ;
la comparaison, par le commutateur réseau, d'une valeur réelle pour une caractéristique du paquet de données à une valeur de référence pour la caractéristique lorsque l'adresse source correspond au premier dispositif électronique et que l'adresse de destination correspond au second dispositif électronique ; et
la transmission, par le commutateur de réseau, du paquet de données au second dispositif électronique lorsque la valeur réelle correspond à la valeur de référence ;
dans lequel la charge utile comporte des données comprenant une ou plusieurs entrées, et la valeur de référence de la caractéristique comprend une plage de valeurs admissibles pour les données, le procédé comprenant le rejet du paquet de données lorsque la valeur réelle tombe en dehors de la plage de valeurs admissibles.

8. Procédé selon la revendication 7, dans lequel la caractéristique comprend la fréquence à laquelle le premier dispositif électronique transmet le paquet de données ; dans lequel la valeur de référence comporte une valeur seuil définissant la fréquence à laquelle le premier dispositif électronique est autorisé à transmettre le paquet de données, dans lequel la valeur réelle est égale à une quantité de temps écoulé depuis que le commutateur réseau a reçu pour la dernière fois le paquet de données du premier dispositif électronique, et dans lequel le procédé comprend en outre le rejet, par le dispositif informatique ou les dispositifs informatiques du commutateur réseau, du paquet de données lorsque la valeur réelle est supérieure à la valeur seuil.

9. Véhicule aérien comprenant :
un réseau de communication déterministe (240) ;
un ou plusieurs dispositifs électroniques (330, 340) couplés en communication au réseau de communication ; et
un commutateur réseau couplé en communication au réseau de communication, le commutateur réseau étant selon l'une quelconque des revendications 1 à 6.
